## Europäisches Patentamt

## European Patent Office

## Office européen des brevets

(19)

(11) Veröffentlichungsnummer: **0 102 347**
**B1**

(12) **EUROPÄISCHE PATENTSCHRIFT**

(45) Veröffentlichungstag der Patentschrift:
08.04.87

(51) Int. Cl.⁴: **B 62 K 19/00**, B 62 K 19/18

(21) Anmeldenummer: **83890141.1**

(22) Anmeldetag: **31.08.83**

(54) **Rahmen für Zweiradfahrzeuge.**

(30) Priorität: **01.09.82 AT 3274/82**

(43) Veröffentlichungstag der Anmeldung:
**07.03.84 Patentblatt 84/10**

(45) Bekanntmachung des Hinweises auf die Patenterteilung:
**08.04.87 Patentblatt 87/15**

(84) Benannte Vertragsstaaten:
**CH DE FR GB IT LI SE**

(56) Entgegenhaltungen:
**DE-C-944 173**
**FR-A-1 076 963**
**FR-A-2 354 916**
**GB-A-22 568**

(73) Patentinhaber: **Steyr- Daimler- Puch Aktiengesellschaft, Kärntnerring 7, A-1010 Wien (AT)**

(72) Erfinder: **Resele, Peter, Dr. Dipl.- Ing., St. Peter Hauptstrasse 31 E, A-8042 Graz (AT)**

EP 0 102 347 B1

## Beschreibung

Die Erfindung betrifft einen Rahmen für Zweiradfahrzeuge mit an ihren aneinander liegenden Rändern fest verbundenen Halbschalen, wobei unter Zweiradfahrzeugen Fahrräder, Motorfahrräder, Leichtmotorräder und Motorräder bzw. Motorroller zu verstehen sind.

Es ist bereits bekannt, den Rahmen eines Zweiradfahrzeuges aus zwei aus gepreßtem Blech gefertigten Halbschalen zusammenzusetzen, deren überlappende Ränder verklebt werden (DE-C-944 173). Nachteilig ist hiebei eine ungünstige Materialausnützung durch gleichbleibende Blechstärke. Es besteht auch keine Möglichkeit zur Integration von örtlichen Verstärkungen, innenliegenden Seilzugführungen, Befestigungsflächen für Anbauteile etc. Da im bekannten Fall kein Formschluß vorhanden ist, muß die Klebung die gesamte Belastung aufnehmen. Durch ein unterschiedliches Auseinanderfedern der Preßteile sind die Toleranzen der Klebfuge kaum beherrschbar. Ein Abstreifen des Klebers beim Zusammenfügen der beiden Halbschalen durch Überlappung kann eine ungleichmäßige Verteilung des Klebers bewirken. Überdies müssen die Halbschalen nach dem Zusammenfügen bis zum Aushärten des Klebers zusätzlich gehalten werden.

Demnach liegt der Erfindung die Aufgabe zugrunde, diese Mängel zu beseitigen und einen Rahmen der eingangs geschilderten Art zu schaffen, der bei vergleichsweise einfacher und billiger Herstellbarkeit und ohne Verminderung seiner Festigkeit ein nur geringes Gewicht besitzt und weitgehende Freiheit hinsichtlich seiner Formgestaltung bietet.

Die Erfindung löst die gestellte Aufgabe dadurch, daß die Ränder der vorzugsweise aus Leichtmetall-Druckguß hergestellten und gegebenenfalls nur Rahmenteile bildenden Halbschalen mit in Randlängsrichtung verlaufender Profilierung formschlüssig ineinandergreifen und zusätzlich durch Nieten, Schrauben und/oder Zapfen mit Preßsitz zusammengehalten sind.

Da die Halbschalen aus Leichtmetall im Druckgußverfahren hergeetellt sind, wird die gewünschte Gewichtsverminderung und die Freizügigkeit hinsichtlich der jeweiligen Form der Halbschalen in bezug auf Umriß und Querschnitt erzielt. Durch des formschlüssige Verkleben der Halbschalenränder in den Bereichen der Stirnseiten der Halbschalen werden die unschönen, bei den bekannten Schalenrahmen aufgrund der Überlappung auftretenden Längsfugen vermieden.

Da die Ränder aber nicht nur verklebt sind, sondern mit der Profilierung unter Formschluß ineinandergreifen und darüber hinaus noch durch Niete od. dgl. zusammengehalten werden, wird die Beanspruchung der Klebestellen herabgesetzt und vor allem auch vermieden, daß bei einer Verwindung ein Auseinanderklaffen der Ränder auftritt, wozu noch kommt, daß durch die Profilierung eine Vergrößerung der Klebeflächen erzielbar ist und ein Wegschieben des aufgetragenen Klebstoffes beim Zusammenfügen der Halbschalen nicht zu befürchten ist. Selbst wenn diese Klebeverbindung versagen sollte, wird durch den Formschluß der ineinandergreifenden Profilierung und den Zusammenhalt durch die Niete od. dgl. ein sofortiger Zusammenbruch des Rahmens verhindert. Es braucht nicht der ganze Rahmen aus den Halbschalen zu bestehen, es können vielmehr auch derartige Schalenelemente mit andersartigen Rahmenteilen kombiniert werden.

In weiterer Ausbildung der Erfindung erstreckt sich die Profilierung nur über einen Teil der Dicke der Halbschalenwand, und es bildet der andere Teil der Wanddicke einen die Profilierung überragenden geraden Randsteg, so daß ein gerader glatter Halbschalenstoß erzielt, die Klebefläche vergrößert und eine Querverschiebung der beiden Halbschalen verhindert wird.

Besonders zweckmäßig ist es, wenn die Profilierung der Halbschalenränder als Verzahnung ausgebildet ist, wobei vorzugsweise die ineinandergreifenden Zahnflanken unter einem annähernd rechten Winkel zur Randlängsrichtung angeordnet sind, so daß bei einer Verwindung oder Querkraftbiegung des aus den Halbschalen gebildeten Rahmens bzw. der Rahmenteile eine möglichst kleine, senkrecht zu den Schalenrändern gerichtete Kraftkomponente auftritt, die eine Belastung der Klebestellen und der Niete od. dgl. ergibt.

Um im Nietbereich eine genügende Wandstärke und insbesondere eine gegenseitige Abstützung der Halbschalen zu erreichen, weisen die Halbschalen innen angeformte, mit ihren Stirnflächen aneinanderstoßende und von einem Niet od. dgl. durchsetzte Butzen auf. Dabei ist es beaonders zweckmäßig, wenn einer der beiden aneinanderstoßenden Butzen einen aus seiner Stirnfläche vorragenden, in ein Loch des anderen Butzens eingreifenden, vorzugaweise vernietbaren Zapfen besitzt, so daß Losteile vermieden und die Niete bei der Halbschalenfertigung in einem Guß mit hergestellt werden können. Haben die an den Butzen der einen Halbschale angeformten Zapfen in den Löchern der anderen Halbschale Preßsitz, so ergibt sich beim Zusammenfügen der beiden Halbschalen nach dem Klebstoffauftrag eine relative Ruhelage der Halbschalen, die während der Aushärtezeit des Klebstoffes erforderlich ist.

In weiterer Ausbildung der Erfindung besitzen die Halbschalen innen Verstärkungsrippen, vorzugsweise Querrippen mit Lagerausnehmungen für Kabel od. dgl., wobei die Querrippen, da es sich bei den Halbschalen um Druckgußteile handelt, keine Herstellungsschwierigkeiten bereiten, je nach Bedarf die erforderliche Rahmenfestigkeit ergeben und mit ihren Lagerausnehmungen zur Festlegung der im Rahmeninneren geführten Kabel od. dgl. dienen.

Bei mittels Muffen verbundenen Rahmenrohren greifen erfindungsgemäß die Rohrenden und die aus den Halbschalen gebildeten Muffen unter Formschluß ineinander und die Rohrenden sind in an sich bekannter Weise mit den Muffen verklebt, wobei aber kein Wegschieben des Klebstoffes beim Einführen der Rohre zu befürchten ist, weil die Muffen sus Halbschalen gebildet sind, so daß die Rohrenden zunächst in die eine Halbschale eingelegt werden können, bevor die andere Halbschale aufgebracht wird. Die Rohrenden samt aufgebrachtem Klebstoff werden somit zwischen den Halbschalen eingeschlossen.

Um die Rohrenden in den Halbschalen noch besser zu halten, weisen die die Muffen bildenden Halbschalen innen Warzen auf, die in passende Löcher der Rohrenden eingreifen.

In weiterer Ausbildung der Erfindung bestehen auch die Rohre aus Halbschalen, deren innengerillte Enden die außen gerillten Muffenenden übergreifen und durch vorzugsweise an einer Rohrhalbschale angeformte Niete zusammengehalten sind. Auch hier ergibt sich durch das Ineinandergreifen der Rillungen ein günstiger kraftübertragender Formschluß zwischen den Rohren und den Muffen, wobei die Bildung der Rohre aus Halbschalen die Möglichkeiten der Formgestaltung des Rahmens erweitert.

Handelt es sich um ein Fahrrad oder Motorfahrrad, sind die Halbschalen im Tretlagerbereich durch eine innen das Tretlager aufnehmende 8und-Gewindebüchse zusammengespannt, so daß sich die sonst erforderlichen Niete od. dgl. erübrigen und eine entsprechende Konstruktionsvereinfachung erreicht wird.

Bei einer aus zwei Schaftrohren bestehenden Hinterradgabel sind die Enden dieser Schaftrohre außen zwischen halbzylindrischen Ansätzen der Halbschalen und innen durch ein Zwischenstück gefaßt, das die Ansätze der Halbschalen zu vollständigen Hohlzylindern ergänzende Halbmuffen aufweist, die durch einen sich an den Halbschalen zwischen deren Ansätzen abstützenden Steg miteinander starr verbunden sind. Dadurch bereitet die Befestigung der Schaftrohre am entsprechenden Schalenrahmenteil keine Schwierigkeiten.

In der Zeichnung ist der Erfindungsgegenstand in mehreren Ausführungsbeispielen dargestellt, und zwar zeigen

Fig. 1 einen Teil einer Halbschale des Rahmens eines Zweiradfahrzeuges im Schaubild,

Fig. 2 den Querschnitt durch einen aus solchen Halbschalen zusammengesetzten Rahmen,

Fig. 3 ein Muffenstück eines aus Muffen und Rohren zusammengesetzten Rahmens in Ansicht,

Fig. 4 eine Muffen-Rohrverbindung im Längsschnitt,

Fig. 5 eine Halbschalenvariante im Schaubild,

Fig. 6 die Verbindung eines aus 2 Halbschalen gebildeten Rahmenteiles mit einem Rahmenrohr im Schnitt,

Fig. 7 den Tretlagerbereich eines Fahrrad- oder Motorfahrradrahmens mit einem Teil der Hinterradgabel im Schnitt und

Fig. 8 die Halbschale eines Tretlagers eines Fahrrad- oder Motorfahrradrahmens mit einem zugehörigen Zwischenstück im Schaubild.

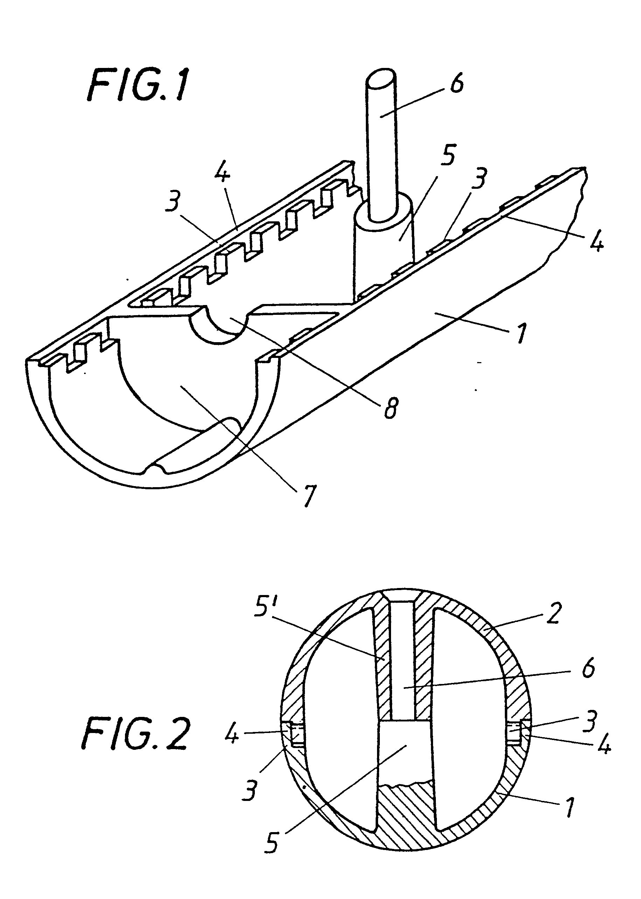

Gemäß den Fig. 1 und 2 besteht der Rahmen eines Zweiradfahrzeuges bzw. wenigstens ein Teil eines solchen Rahmens aus an ihren aneinander liegenden Rändern fest verklebten Halbschalen 1, 2, die aus Leichtmetall-Druckguß hergestellt sind. Die aneinander liegenden und miteinander verklebten Ränder sind mit einer zahnartigen, in Randlängsrichtung verlaufenden Profilierung 3 versehen, mit der sie formschlüssig ineinandergreifen. Dabei erstreckt sich die Verzahnung bzw. Profilierung 3 nur über einen Teil der Dicke der Halbschalenwand, wobei der andere Teil der Wanddicke einen die Profilierung 3 überragenden geraden Randsteg 4 bildet. Die Zahnflanken sind unter einem annähernd rechten Winkel zur Randlängsrichtung angeordnet. Die Halbschalen 1, 2 weisen innen angeformte, mit ihren Stirnflächen aneinander stoßende Butzen 5, 5' auf, wobei jeweils der eine Butzen 5 einen aus seiner Stirnfläche vorragenden, in ein Loch des anderen Butzens 5' eingreifenden und beim Zusammensetzen der Halbschalen 1, 2 vernietbaren Zapfen 6 besitzt. Aus Fig. 1 ist ersichtlich, daß die Halbschalen 1, 2 innen mit Querrippen 7 versehen sind, die eine Lagerausnehmung 8 für innerhalb des Rahmens geführte Kabel od. dgl. aufweisen. Selbstverständlich können die Halbschalen auch Verstärkungsrippen anderer Form und Anordnung besitzen.

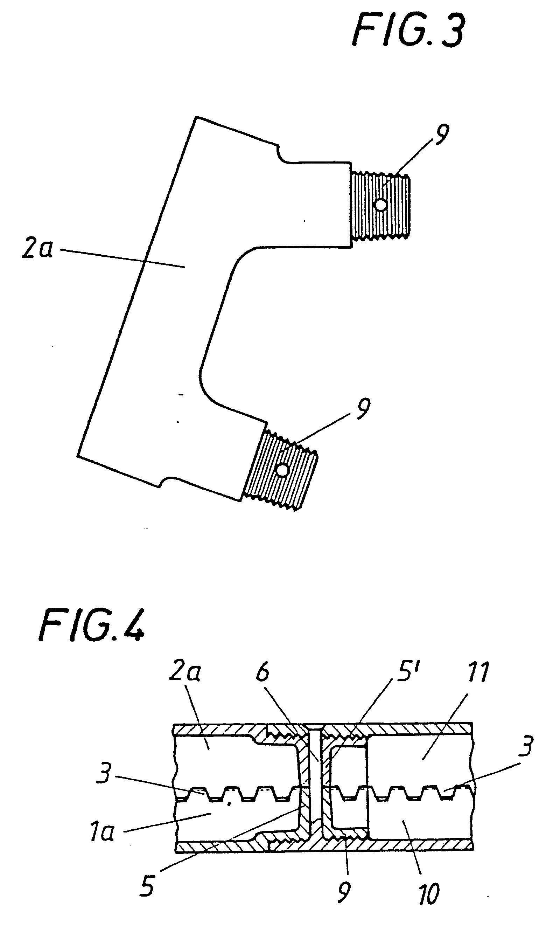

Das Muffenstück nach Fig. 3 besteht aus Halbschalen 1a, 2a, deren Teilungsebene parallel zur Bildebene verläuft. Dabei greifen die Rohrenden und das aus den Halbschalen 1a, 2a gebildete Muffenstück unter Formschluß ineinander, und die Rohrenden sind mit dem Muffenstück 1a, 2a verklebt. Die Muffenenden 9 weisen eine Außenrillung auf. Die Rohre können ebenfalls aus Halbschalen 10, 11 (Fig. 4) bestehen, wobei die Enden der Rohre eine Innenrillung besitzen, die mit der Rillung der Muffenenden 9 Formschluß bildet, wobei die Muffenenden 9 und die Halbschalen 10, 11 der Rohre durch einen Niet 6 zusammengehalten sind.

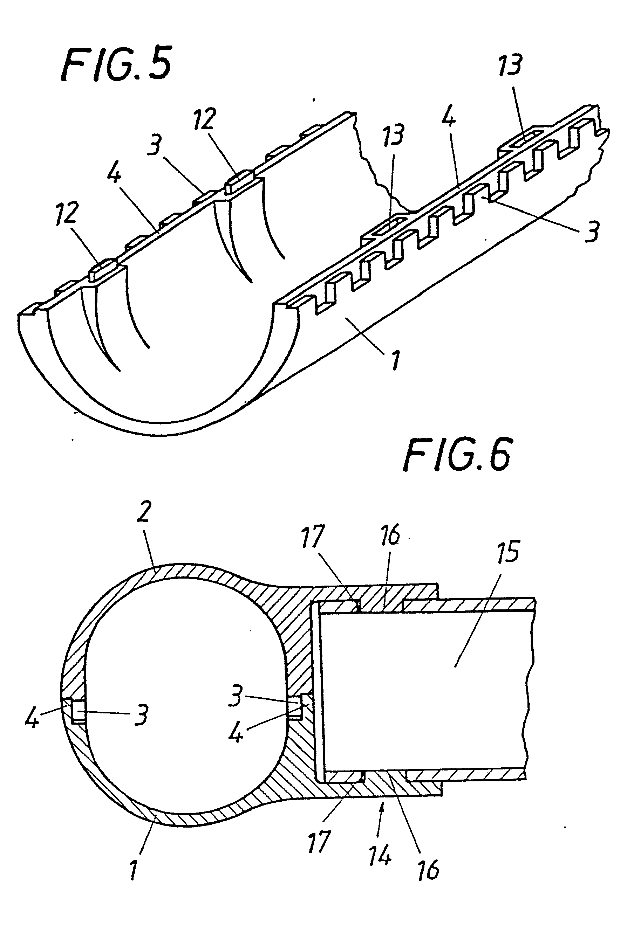

Bei der Variante einer Halbschale 1 nach Fig. 5 ist die Profilierung 3 der Ränder der Halbschale 1 an der Außenseite angeordnet, wogegen der Steg 4 innenseitig liegt. Außerdem sind im Randbereich Vorsprünge 12 bzw. entsprechende Ausnehmungen 13 vorgesehen, so daß beim Zusammensetzen der Halbschalen die Vorsprünge 12 jeweils in die Ausnehmungen 13 eingreifen können. Nach Fig. 6 weist der aus den Halbschalen 1, 2 zusammengesetzte Rahmenteil einen seitlichen Muffenansatz 14 auf, der ein einteiliges Rahmenrohr 15 umfaßt. Dabei sind die den Muffenansatz 14 bildenden Halbschalen 1, 2 innen mit Warzen 16 versehen, die in passende Löcher 17 des Rohres 15 eingreifen.

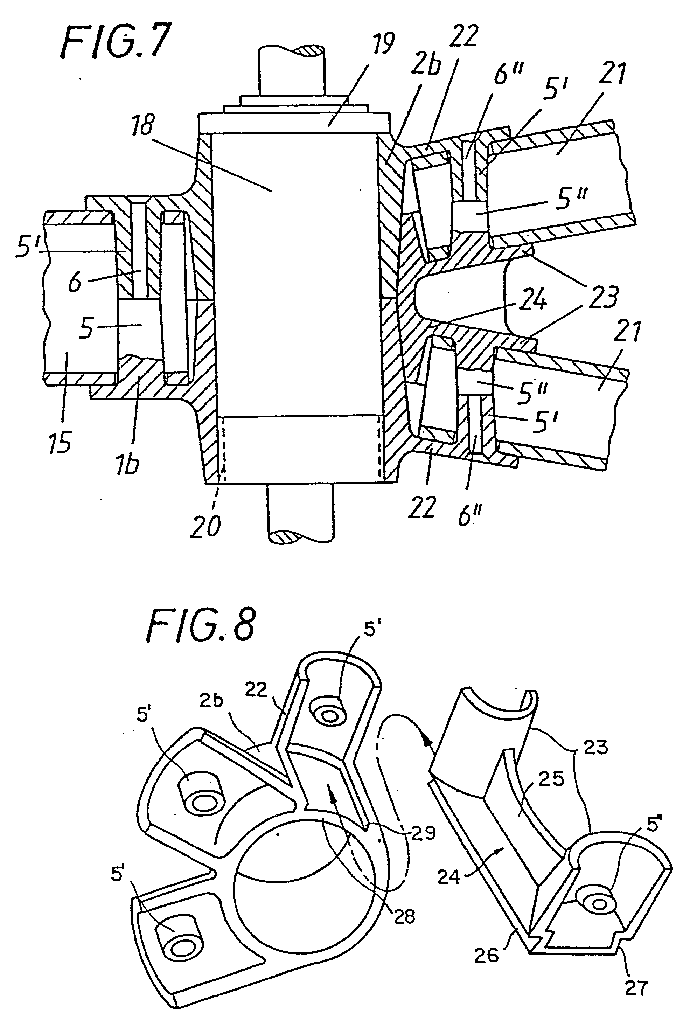

Die Halbschalen 1b, 2b, die den Rahmenteil eines Fahrrades im Tretlagerbereich bzw. am vorderen Ende der Hinterradgabel bilden, aind gemäß Fig. 7 durch eine innen den Tretlagerbereich aufnehmende Büchse 18 zusammengespannt, die einerseits einen Bund 19 und anderseits ein Gewinde 20 besitzt. Die formschlüssig ineinandergreifende Randprofilierung ist der besseren Übersichtlichkeit halber nicht dargestellt. Das Rahmenrohr 15 ist einstückig ausgebildet und greift in die Halbschalen 1b, 2b ein, die im Bereich des Rohrendes durch einen Niet 6 zusammengefaßt sind. Die Hinterradgabel besteht aus zwei Schaftrohren 21, deren Enden außen zwischen halbzylindrischen Ansätzen 22 (Fig. 8) der Halbschalen 1b, 2b und innen durch ein Zwischenstück 24 gefaßt sind, wobei das Zwischenstück 24 mit Butzen 5'' und vernietbaren Zapfen 6'' versehen ist, die mit Butzen 5' der halbzylindriachen Ansätze 22 zusammenwirken. Das Zwiachenstück 24 weist Halbmuffen 23 auf, welche die halbzylindrischen Ansätze 22 der Halbschalen 1b, 2b zu vollständigen Hohlzylindern ergänzt. Die Halbmuffen 23 sind durch einen sich an den Halbschalen 1b, 2b zwischen deren halbzylindrischen Ansätzen 22 abstützenden Steg 25 miteinander starr verbunden. Das Zwischenstück 24 besitzt Schwalbenschwanzführungen 26 bzw. 27, die in entsprechende Führungen 28 bzw. 29 der Halbschalen 1b, 2b zu deren Verdrehsicherung einschiebbar sind.

## Patentansprüche

1. Rahmen für Zweiradfahrzeug mit an ihren aneinender liegenden Rändern verklebten Halbschalen, dadurch gekennzeichnet, daß die Ränder der vorzugsweise aus Leichtmetall-Druckguß hergestellten und gegebenenfalls nur Rahmenteile bildenden Halbschalen (1, 2; 1a, 2a; 1b, 2b) mit in Randlängsrichtung verlaufender Profilierung (3) formschlüssig ineinander greifen und zusätzlich durch Nieten, Schrauben und/oder Zapfen (6) mit Preßsitz zusammengehalten sind.

2. Rahmen nach Anspruch 1, dadurch gekennzeichnet, daß sich die Profilierung (3) nur über einen Teil der Dicke der Halbschalenwand erstreckt und der andere Teil der Wanddicke einen die Profilierung (3) überragenden geraden Randsteg (4) bildet.

3. Rahmen nach Anspruch 1 oder 2, dadurch gekennzeichnet, daß die Profilierung (3) der Halbschalenränder als Verzahnung ausgebildet ist.

4. Rahmen nach Anspruch 3, dadurch gekennzeichnet, daß die ineinander greifenden Zahnflanken unter einem annähernd rechten Winkel zur Randlängsrichtung angeordnet sind.

5. Rahmen nach einem der Ansprüche 1 bis 4, dadurch gekennzeichnet, daß die Halbschalen (1, 2; 1a, 2a; 1b, 2b) innen angeformte, mit ihren Stirnflächen aneinander stoßende und von einem Niet od. dgl. durchsetzte Butzen (5, 5') aufweisen.

6. Rahmen nach Anspruch 5, dadurch gekennzeichnet, daß einer (5) der beiden aneinander stoßenden Butzen (5, 5') einen aus seiner Stirnfläche vorragenden, in ein Loch des anderen Butzens (5') eingreifenden, vorzugsweise vernietbaren Zapfen (6) besitzt.

7. Rahmen nach Anspruch 1, dadurch gekennzeichnet, daß die Halbschalen (1, 2) innen Verstärkungsrippen, vorzugsweise Querrippen (7) mit Lagerausnehmungen (8) für Kabel od. dgl. besitzen.

8. Rahmen nach Anspruch 1, dadurch gekennzeichnet, daß bei mittels Muffen (14) verbundenen Rahmenrohren (15) die Rohrenden und die aus den Halbschalen (1, 2; 1a, 2a; 1b, 2b) gebildeten Muffen unter Formschluß ineinandergreifen und die Rohrenden in an sich bekannter Weise mit den Muffen (14) verklebt sind.

9. Rahmen nach Anspruch 8, dadurch gekennzeichnet, daß die die Muffen (14) bildenden Halbschalen (1, 2) innen Warzen (16) aufweisen, die in passende Löcher (17) der Rohrenden eingreifen.

10. Rahmen nach Anspruch 8, dadurch gekennzeichnet, daß auch die Rohre aus Halbschalen (10, 11) bestehen, deren innen gerillte Enden die außen gerillten Muffenenden (9) übergreifen und durch vorzugsweise an einer Rohr-Halbschale (1a) angeformte Nieten (6) zusammengehalten sind.

11. Rahmen nach Anspruch 1, dadurch gekennzeichnet, daß die Halbschalen (1b, 2b) im Tretlagerbereich durch eine innen das Tretlager aufnehmende Bund-Gewindebüchse (18, 19, 20) zusammengespannt sind.

12. Rahmen nach Anspruch 11, dadurch gekennzeichnet, daß bei einer aus zwei Schaftrohren (21) bestehenden Hinterradgabel die Enden dieser Schaftrohre (21) außen zwischen halbzylindrischen Ansätzen (22) der Halbschalen (1b, 2b) und innen durch ein Zwischenstück (24) gefaßt sind, das die Ansätze (22) der Halbschalen (1b, 2b) zu vollständigen Hohlzylindern ergänzende Halbmuffen (23) aufweist, die durch einen sich an den Halbschalen (1b, 2b) zwischen deren Ansätzen (22) abstützenden Steg miteinander starr verbunden sind.

## Claims

1. A frame for a two-wheeled vehicle, with half-shells stuck together at their adjacent edges, characterised in that the edges of the half-shells (1, 2; 1a, 2a; 1b, 2b), which are preferably manufactured from light metal die casting and optionally only constitute parts of the frame and which have profiling running in the longitudinal direction of the edge, engage in one another with positive locking and are additionally held together by rivets, screws and/or pins (6) in a force fit.

2. A frame according to claim 1, characterised in that the profiling (3) only extends over part of the thickness of the half-shell wall, while the other part of the wall thickness forms a straight edge web which projects above the profiling.

3. A frame according to claim 1 or 2, characterised in that the profiling (3) of the half-shell edges takes the form of indentations.

4. A frame according to claim 3, characterised in that interlocking tooth flanks are disposed approximately at a right angle to the longitudinal direction of the edge.

5. A frame according to any one of claims 1 to 4, characterised in that the half-shells (1, 2; 1a, 2a; 1b, 2b) have projections (5, 5') which are integrally formed on the inside and the front surfaces of which meet each other and which are traversed by a rivet or the like.

6. A frame according to claim 5, characterised in that one (5) of the two projections (5, 5') which meet each other has a pin (6), which protrudes from the front surface of the projection, engages in a hole in the other projection (5'), and is preferably rivetable.

7. A frame according to claim 1, characterised in that the half-shells (1, 2) have internal reinforcing ribs, preferably transverse ribs (7) with bearing recesses (8) for cables or the like.

8. A frame according to claim 1, characterised in that, in the case of frame tubes (15) which are connected by means of sockets (14), the tube ends and the sockets formed from the half-shells (1, 2; 1a, 2a; 1b, 2b) engage with one another with positive locking and the tube ends are stuck to the socksts (14) in a known manner.

9. A frame according to claim 8, characterised in that the half-shells (1, 2) which form the sockets (14) have internal pegs (16) which engage in suitable holes (17) in the tube ends.

10. A frame according to claim 8, characterised in that the tubes also consist of half-shells (10,11) having internally grooved ends which overlap externally grooved socket ends (9) and are held together by rivets (6) which are preferably integrally moulded on a tube half-shell (1a).

11. A frame according to claim 1, characterised in that the half-shells (1b, 2b) are clamped together in the region of the bottom bracket bearing by a collar threaded sleeve (18, 19, 20) which receives the bottom bracket bearing internally.

12. A frame according to claim 11, characterised in that, in the case of a bottom fork which consists of two shaft tubes (21), the ends of these shaft tubes (21) are held externally between semi-cylindrical attachments (22) of the half-shells (1b, 2b) and internally by an intermediate member (24) which has half-sockets (23), which make the attachments (22) of the half-shells (1b, 2b) into complete hollow cylinders and which are rigidly held together by a web which is supported on the half-shells (1b, 2b), between their attachmente (22).

**Revendications**

1. Cadre pour véhicule à deux roues avec des demicoques collées par leurs bords contigus, caractérisé en ce que les bords des demi-coques (1, 2; 1a, 2a; 1b, 2b) en métal léger sous pression, et ne constituant éventuellement que des parties de cadre, s'engagent l'un avec l'autre par encastrement de formes grâce à un profilage (3) de ces bords dans leur sens longitudinal et sont en plus tenus assemblés avec un ajustement serré au moyen de rivets, vis et/ou chevilles (6).

2. Cadre selon la revendication 1 caractérisé en ce que le profilage (3) n'existe que sur une partie de l'épaisseur de la paroi de la demi-coque et l'autre partie de l'épaisseur de la paroi constitue une nervure de bord (4) rectiligne débordant la partie profilée (3).

3. Cadre selon la revendication 1 ou 2, caractérisé en ce que le profilage (3) des bords des demi-coques forme une denture.

4. Cadre selon la revendication 3 caractérisé en ce que les flancs des dents qui s'engagent ensemble sont sensiblement perpendiculaires à la direction longitudinale du bord.

5. Cadre selon l'une quelconque des revendications 1 à 4, caractérisé en ce que les demi-coques (1, 2; 1a, 2a; 1b, 2b) présentent intérieurement des bossages (5, 5') venus de coulée, butant l'un contre l'autre par leurs faces frontales, et traversés par un rivet ou un moyen analogue.

6. Cadre selon la revendication 5 caractérisé en ce que l'un (5) des deux bossages (5, 5') butant l'un contre l'autre possède une cheville (6) pouvant être rivetée, en saillie à partir de sa face frontale et s'engageant dans un trou de l'autre bossage (5').

7. Cadre selon la revendication 7 caractérisé en ce que les demi-coques (1, 2) possédent intérieurement des nervures de renforcement, de préférence des nervures transversales (7) avec des évidements (8) pour câbles ou elements analogues.

8. Cadre selon la revendication 1 caractérisé en ce que, lorsqu'il y a des tubes de cadre (15) reliés au moyen de manchons (14), les extrémités de tube et les manchons formés par les demi-coques (1, 2; 1a, 2a; 1b, 2b) s'engagent l'un dans l'autre par encastrement de formes et, de façon connue en soi, les extrémités des tubes sont collées aux manchons (14).

9. Cadre selon la revendication 8 caractérisé en ce que les demi-coques (1, 2) constituant les manchons (14) présentent intérieurement des tétons (16) qui s'engagent dans des trous (17) correspondants des extrémités de tube.

10. Cadre selon la revendication 8 caractérisé en ce que les tubes sont constitués par des demi-coques (10, 11) dont les extrémités rainurées intérieurement s'engagent par-dessus les extrémités de manchon (9) rainurées extérieurement et sont tenues ensemble par des rivets (6) de préférence venus de coulée sur une demi-coque de tube (1a).

11. Cadre selon la revendication 1 caractérisé en ce que les demi-coques (1b, 2b) sont tenues assemblées dans la zone du palier de pédalier par une douille à collet et à filetage (18, 19, 20) contenant intérieurement le palier de pédalier.

12. Cadre selon la revendication 11 caractérisé en ce que, lorsque la fourche de la roue arrière est faite de deux branches tubulaires (21), les extrémités de ces branches tubulaires (21) sont prises à l'extérieur entre des embouts (22) demi-cylindriques des demi-coques (1b, 2b) et à l'intérieur par une pièce intercalaire (24) qui présente des demi-manchons (23) complétant les embouts (22) des demi-coques (1b, 2b) pour former des cylindres creux complets, ces demi-manchons étant reliés de façon rigide par une entretoise qui s'appuie sur les demi-coques (1b, 2b) entre leurs embouts (22).

FIG.1

FIG.2

# FIG. 3

2a

9

9

# FIG. 4

2a    6    5'    11

3    3

1a

5    9    10

# FIG.5

# FIG.6

# FIG.7

# FIG.8